(19) Europäisches Patentamt
European Patent Office
Office européen des brevets

(11) Veröffentlichungsnummer: **0 276 718 B1**

(12) # EUROPÄISCHE PATENTSCHRIFT

(45) Veröffentlichungstag der Patentschrift: **02.09.92**

(21) Anmeldenummer: **88100624.1**

(22) Anmeldetag: **18.01.88**

(51) Int. Cl.⁵: **C08F 226/10**, C08F 220/44, C08F 220/54, C09K 7/02, //(C08F226/10,220:44,220:54), (C08F220/44,226:10,220:54), (C08F220/54,226:10,220:44)

(54) **Thermostabile Polymerisate.**

(30) Priorität: **21.01.87 DE 3701600**

(43) Veröffentlichungstag der Anmeldung: **03.08.88 Patentblatt 88/31**

(45) Bekanntmachung des Hinweises auf die Patenterteilung: **02.09.92 Patentblatt 92/36**

(84) Benannte Vertragsstaaten: **CH DE FR GB IT LI NL**

(56) Entgegenhaltungen:
**EP-A- 0 256 797**
**DE-A- 3 404 491**
**DE-A- 3 434 137**
**US-A- 4 544 722**

(73) Patentinhaber: **SKW Trostberg Aktiengesellschaft**
**Dr.-Albert-Frank-Strasse 32 Postfach 1150/1160**
**W-8223 Trostberg(DE)**

(72) Erfinder: **Aignesberger, Alois, Dr.**
**Pienzenauerstrasse 16**
**W-8223 Trostberg(DE)**
Erfinder: **Weichmann, Josef, Dr.**
**Brandhub 5**
**W-8251 Pleiskirchen(DE)**
Erfinder: **Plank, Johann, Dr.**
**Peter-Müllritter-Strasse 8**
**W-8223 Trostberg(DE)**
Erfinder: **Bichler, Manfred**
**Mühldorfer Strasse 144**
**W-8261 Engelsberg(DE)**

(74) Vertreter: **Huber, Bernhard, Dipl.-Chem. et al**
**Patentanwälte H. Weickmann, Dr. K. Fincke F.A. Weickmann, B. Huber Dr. H. Liska, Dr. J. Prechtel Kopernikusstrasse 9 Postfach 86 08 20**
**W-8000 München 86(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die vorliegende Erfindung betrifft thermostabile Polymerisate, welche als Retentionsmittel für wäßrige Systeme oder als Zusätze zu Bohrspülungen, insbesondere als Fluid loss-Additive Verwendung finden können.

Es ist bekannt, daß wasserbasische Bohrspülungen, welche aus Bentonit- bzw. Tonsuspensionen bestehen, Zusatzmittel enthalten. Solche sind z.B. Fluid loss-Additive, welche durch Ausbildung einer dünnen Filterschicht verhindern, daß Wasser aus der Bohrspülung in die porösen durchbohrten Formationen abfiltriert. Die Fluid loss-Additive sollen eine gute Filtratkontrolle bewirken und eine hohe Temperaturstabilität aufweisen, weil die Temperaturen der Bohrspülungen mit zunehmender Bohrtiefe aufgrund der Erdwärme und der Reibung sehr stark ansteigen. Außerdem sollen diese Zusatzmittel eine gute Salzverträglichkeit, insbesondere gegenüber mehrwertigen Kationen wie Calcium und Magnesium, besitzen, damit sie ihre Fluid loss-Wirkung beim Durchbohren von Salzstöcken nicht verlieren.

Von den bisher bekannten Additiven weisen nur wenige bezüglich der Gesamtheit an erforderlichen Eigenschaften zufriedenstellende Ergebnisse auf. Stärke bzw. modifizierte Stärke besitzt zwar eine praktisch unbegrenzte Elektrolytverträglichkeit, doch ist die Thermo-stabilität, die ca.120 ° C beträgt, nicht ausreichend Eine etwas bessere Thermostabilität besitzen Cellulosederivate wie z.B. Carboxymethylcellulose, doch ist ihre Salzverträglichkeit deutlich begrenzt. Gute Thermostabilitäten besitzen nur synthetische Polymerverbindungen. Dies gilt insbesondere für Acrylamid/Acrylat-Copolymere.

Polymere dieses Typs besitzen in Süßwasserspülungen gute Fluid loss-Wirkung bis über 200 ° C, verlieren ihre Effektivität aber bei Zutritt selbst geringer Mengen mehrwertiger Kationen. Der Grund hierfür liegt wahrscheinlich in der im alkalischen Bohrspülungsmilieu leicht eintretenden Verseifung der Amid-Gruppen zu Acrylat-Funktionen.

Eine sowohl hinsichtlich Temperaturstabilität als auch Salzverträglichkeit gute Wirkung besitzen Copolymerisate auf Basis Vinylsulfonat/Vinylamid, z.B. Copolymerisate auf Basis von Acrylamidopropansulfonsäure (AMPS), die beispielsweise mit Acrylamiden (vgl. US 42 93 427), oder mit Vinylamiden und Acrylamid (DE-OS 29 31 997) bzw. mit Acrylamid und Acrylnitril (vgl. US 45 02 964) copolymerisiert wird.

Polymerisate dieses Typs tolerieren als Bohrspülungsadditive hohe Zuflußmengen von Calcium- bzw. Magnesiumionen, ohne in ihrer Fluid loss-Wirkung an Effektivität zu verlieren.

Nachteilig bei dieser Gruppe von Copolymerisaten ist jedoch die Tatsache, daß je nach Schwierigkeit der zu beherrschenden Spülung (Calciumgehalt, Spülungsdichte) auch hier der praktische Einsatzbereich durch thermischen Abbau bei Temperaturen von wenig über 200 ° C limitiert ist.

Der Einsatz dieser Fluid loss-Additive ist bei höheren Temperaturen der Bohrlochsole, wenn überhaupt, nur noch mit unwirtschaftlichen Dosierungen denkbar.

Schließlich werden in der US-PS 45 02 965 Terpolymerisate beschrieben, welche neben Acrylamidopropansulfonsäure (AMPS) noch N-Vinylpyrrolidon und Acrylnitril enthalten. Die Temperaturstabilität bzw. Salzverträglichkeit ist bei diesen Produkten ebenso begrenzt wie bei den Copolymerisaten gemäß der US-PS 45 78 201, auf Basis von N-Vinyllactamen und ungesättigten Amiden.

Der Erfindung liegt daher die Aufgabe zugrunde, Polymerisate zu entwickeln, welche die genannten Nachteile des Standes der Technik nicht aufweisen, sondern insbesondere in wässrigem Medium auch bei hohen Temperaturen und Salzkonzentrationen eine gute Wirkung als Bohrspülungsadditiv zeigen und kostengünstig anzuwenden sind.

Diese Aufgabe wird erfindungsgemäß gelöst durch ein Polymerisat, bestehend aus

a) 16 bis 67 Mol % Baugruppen der Formel I

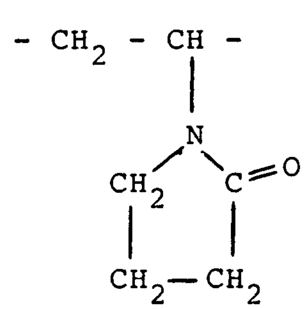

b) 5 bis 42 Mol % Baugruppen der Formel II

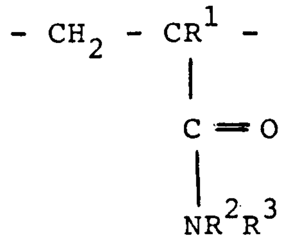

wobei $R^1$, $R^2$ und $R^3$ jeweils unabhängig voneinader H oder $CH_3$ bedeuten, sowie

c) 16 bis 46 Mol % Baugruppen der Formel III

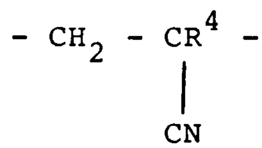

mit $R^4$ = H oder $CH_3$.

Es hat sich überraschenderweise gezeigt, daß die erfindungsgemäßen Polymerisate im Vergleich zu den bisher bekannten Produkten auch bei relativ hohen Temperaturen und Salzkonzentrationen eine bessere Wirkung aufweisen.

Die Polymerisate der Erfindung sind mindestens teilweise wasserlöslich und lassen sich durch Hydrolyse in die wasserlöslich Form überführen, falls eine bessere Wasserlöslichkeit gewünscht wird.

Die Polymerisate gemäß der vorliegenden Erfindung bestehen aus mindestens drei Baugruppen. Die erste Baugruppe entsprechend der Formel I leitet sich von N-Vinylpyrrolidon ab und liegt in einem Molverhältnis von 16 bis 67 Mol %, vorzugsweise von 41 bis 57 Mol %, bezogen auf die Molsumme der 3 essentiellen Baugruppen, vor.

Die zweite Baugruppe der Formel II, die sich von Acrylamid und/oder Methacrylamid ableitet, liegt in einem Verhältnis von 5 bis 43 Mol %, vorzugsweise 13 bis 18 Mol % vor. Das Acrylamid bzw. Methacrylamid kann sowohl in unsubstituierter als auch in mono- bzw. disubstituierter Form vorliegen, wobei als Substituent der Methylrest in Frage kommt.

Die dritte Baugruppe entsprechend der Formel III, die sich von Acrylnitril und/oder Methacrylnitril ableitet, ist schließlich in einem Verhältnis von 16 bis 46 Mol %, vorzugsweise 30 bis 41 Mol %, in das Polymerisat eingebaut.

Neben diesen drei erfindungswesentlichen Baugruppen können die erfindungsgemäßen Polymerisate noch bis zu 40 Mol %, bezogen auf die Summe der drei essentiellen Baugruppen, Baugruppen enthalten, deren Monomere einen Q-Wert von 0,04 bis 5 aufweisen. Der Q-Wert nach Alfrey und Price stellt ein Maß für die Reaktivität des jeweiligen Monomeren für die radikalische Polymerisation dar (vgl. hierzu B. Vollmert: Grundriß der makromolekularen Chemie Bd. I, S. 154 ff, 1982 Karlsruhe). Bevorzugte Monomere dieser Gruppe sind Melthylvinylketon, Allylalkohol, Acrolein, Mesityloxid, Acrylsäure und Methacrylsäure bzw. deren Salze und Ester.

Darüber hinaus können die Polymerisate noch bis zu 10 Mol % eines üblichen Vernetzers enthalten, der vorzugsweise zwei olefinische Doppelbindungen enthält und besonders bevorzugt N,N-Methylen-bis-acrylamid und/oder Isopren ist.

Das Molekulargewicht der Polymerisate der Erfindung kann in weiten Grenzen variieren und kann je nach eingesetzten Monomerverbindungen und Polymerisationsbedingungen zwischen 10 000 und 2,0 Millionen D liegen.

Im Rahmen der Erfindung können die Baugruppen I bis III ganz oder teilweise in hydrolisierter Form vorliegen. Die Hydrolyse dieser Verbindungen wird im basischen Medium vorgenommen, wobei entsprechend dem gewünschten Hydrolysegrad stöchiometrische oder unterstöchiometrische Mengen an Basen verwendet werden können. Es ist auch möglich, die Hydrolyse im alkalischen Milieu des Anwendungssystems, beispielsweise einer Bohrspülung oder einer Zementschlämme, durchzuführen.

Die Herstellung der erfindungsgemäßen Polymerisate erfolgt in der Weise, daß man 16 bis 67 Mol %, vorzugsweise 41 bis 57 Mol % N-Vinylpyrrolidou sowie 5 bis 42 Mol %, vorzugsweise 13 bis 18 Mol % eines Acrylamids und/oder Methacrylamids und 16 bis 46 Mol %, vorzugsweise 30 bis 41 Mol % Acrylnitril

und/oder Methacrylnitril in wäßrigem Medium mit Hilfe eines Starters bei 20 bis 200° C, vorzugsweise bei 50 bis 100° C polymerisiert.

Das Acrylamid und/oder Methacrylamid kann in unsubstituierter, mono- oder disubstituierter Form eingesetzt werden, wobei als Substituent der Methylrest in Frage kommt.

Gegebenenfalls kann man dem Gemisch, bestehend aus N-Vinylpyrrolidon, Acrylamid und/oder Methacrylamid und Acrylnitril und/oder Methacrylnitril noch bis zu 40 Mol % eines weiteren Monomers mit einem Q-Wert von 0,04 bis 5 zusetzen. Als Monomere haben sich hierbei besonders Methylvinylketon, Allylakohol, Acrolein, Mesityloxid, Acrylsäure und Methacrylsäure bzw. deren Salze und Ester bewährt.

Die Konzentration der wäßrigen Lösung kann in relativ weiten Grenzen variiert werden, doch hat es sich als vorteilhaft erwiesen, eine Feststoffkonzentration von 10 bis 70 Gew.-%, vorzugsweise 30 bis 50 Gew.-% einzustellen.

Als Starter können die üblichen Verbindungen, wie z.B. Azoisobutyronitril (AIBN) oder Dibenzoylperoxid, in einer Menge von 0,1 bis 5 Gew.-%, bezogen auf das Gewicht der Reaktionslösung, eingesetzt werden.

Nach der Polymerisationsreaktion, welche in der Regel nach 1 bis 2 Stunden beendet ist, kann, falls dies gewünscht wird, eine Hydrolysereaktion durchgeführt werden. Hierzu eignen sich die üblichen Basen bei Temperaturen von 50 bis 100° C, vorzugsweise bei 60 bis 80° C, wobei die eingesetzten Basenmengen sich nach dem gewünschten Hydrolysegrad richten.

Als übliche Basen kommen vorzugsweise Alkali-, Erdalkali- und Ammoniumsalze in Frage, doch können grundsätzlich auch andere basisch wirkende Verbindungen eingesetzt werden, welche die Hydrolyse bewirken.

Nach Abschluß der Polymerisatinsreaktion bzw. der Hydrolyse liegt das Polymerisat im allgemeinen als ca. 10 bis 30%ige wäßrige Lösung vor und kann in dieser Form direkt als Fluid loss-Additiv oder als Retentionsmittel eingesetzt werden. Die Lösung kann aber auch mit den üblichen Verfahren und Vorrichtungen entwässert und so das Polymerisat als Feststoff gewonnen werden, ohne daß sich bezüglich der Eigenschaften Einbußen feststellen lassen. die molprozentuale Zusammensetzung des Polymerisats entspricht praktisch den eingesetzten Monomermengen, da nach der Polymerisation Monomere nur noch in Spuren nachweisbar sind.

Die erfindungsgemäßen Polymerisate eignen sich hervorragend als Retentionsmittel für wäßrige Systeme. Als wäßrige Systeme im Sinne der vorliegenden Erfindung sind beispielsweise wäßrige anorganische Bindemittelsuspensionen zu verstehen wie Zementschlämmen, Mörtel, Beton o.ä.. Darüber hinaus können die Polymerisate für wäßrige Tonsuspensionen beispielsweise in Form von Bohrspülungen verwendet werden, wobei als Tone insbesondere Bentonit oder Attapulgit in Frage kommen.

In Bohrspülungen können die erfindungsgemäßen Polymerisate als sogenannte Fluid loss-Additive, vorzugsweise in einer Menge von 0,3 bis 5 Gew.-% bezogen auf das Gewicht der Bohrspülung, eingesetzt werden und besitzen in Abhängigkeit von der Spülungszusammensetzung eine Temperaturbeständigkeit bis mindestens 250° C. Auch die Salzverträglichkeit dieser Polymerisate ist hervorragend. Insbesondere die Verträglichkeit mit zweiwertigen Kationen wie Calcium-Ionen ist praktisch unbegrenzt.

Schließlich weisen die erfindungsgemäßen Polymerisate auch in wäßrigen Lösungen, die nur wenig oder keine suspendierten Feststoffe enthalten, eine gute Retentionswirkung auf. Diese Wirkung ist besonders bei den sogenannten Komplettierungsflüssigkeiten gefragt, welche in der Erdölindustrie, z.B. in Form von Kochsalz-, Calciumchlorid- oder Calcium-/Zinkbromidlösungen eingesetzt werden. Die Menge bei Einsatz als Retentionsmittel beträgt je nach Anwendungzweck 0,1 bis 10 Gew.-% bezogen auf das wäßrige System.

Die nachfolgenden Beispiele sollen die Erfindung näher erläutern, ohne sie jedoch derauf zu beschränken.

Beispiel 1 (Herstellung)

Einwaage

| | | |
|---|---|---|
| a) | 20,8 g | Acrylnitril |
| b) | 65,3 g | N-Vinylpyrrolidon |
| c) | 13,9 g | Acrylamid |
| d) | 150 g | Wasser |
| e) | 0,30 g | Azoisobutyronitril (gelöst in 20 ml Methanol) |

Die Komponenten a), b), c) und d) werden vorgelegt und es wird ca. 30 Min. Stickstoff in die Lösung eingeleitet.

Anschließend wird die Komponente e) zugegeben und erwärmt. Bei ca. 65 °C springt die Reaktion mit gemäßigter Exothermie an. Während der Polymerisationsreaktion wird die Lösung zunehmene viskoser. Um den Ansatz immer gut rührbar zu halten, wird sukzessive mit ca. 450 ml Wasser verdünnt, wobei jeweils ca. 20 bis 50 ml Wasser zugegeben werden. Nach Ablauf der 45 bis 60-minütigen Reaktionsperiode wird die Reaktionslösung noch ca. 1 Std. bei 80 bis 85 °C gerührt. Die farblose Lösung weist einen Feststoffgehalt von 10 bis 20 Gew.-% und eine Viskosität von 5 000 bis 25 000 mPa•s auf.

Beispiel 2 (Herstellung)

Einwaage

| | | |
|---|---|---|
| a) | 26,5 g | Acrylnitril |
| b) | 22,2 g | N-Vinylpyrrolidon |
| c) | 35,5 g | Acrylamid |
| d) | 126 g | Wasser |
| e) | 0,25 g | Azoisobutyronitril (in 20 ml Methanol) |
| f) | 1,7 g | NaOH (17 ml 10%ige Natronlauge) |

Die Komponenten a), b), c) und d) werden vorgelegt. Nach 30minütigem $N_2$-Einleiten wird e) zugegeben und erwärmt. Die Reaktion springt ab ca. 65 °C mit deutlichem Viskositätsanstieg an. Es wird eine Stunde bei 80 bis 90 °C gehalten und schrittweise mit insgesamt ca. 350 ml Wasser verdünnt.

Man erhält ein trübes, milchig-weißes Polymerisat mit einem Feststoffgehalt von 10 bis 20 % und einer Viskosität von 2 000 bis 40 000 mPa•s, das in dieser Form bereits als Fluid loss-Additiv eingesetzt werden kann.

Um eine klare Lösung zu erhalten, wird mit f) sowie 100 ml Wasser ca. 30 Minuten bei 80 °C thermisch nachbehandelt.

Beispiel 3 (Herstellung)

Einwaage

| | | |
|---|---|---|
| a) | 208 g | Acrylnitril |
| b) | 653 g | N-Vinylpyrrolidon |
| c) | 139 g | Acrylamid |
| d) | 76 g | Allylalkohol |
| e) | 1500 g | Wasser |
| f) | 5,9 g | Dibenzoylperoxid |

Die Komponenten a) bis e) werden vorgelegt und unter Rühren 30 Minuten $N_2$ eingeleitet. Anschließend gibt man f) zu und erwärmt. Bei etwa 60 bis 70 °C springt die exotherme Reaktion an und bedingt einen Viskositätsanstieg. Es wire 1 Stunde bei 80 bis 90 °C gehalten und schrittweise mit ca. 1250 ml Wasser verdünnt.

Man erhält ein milchig-weißes Polymerisat mit einem Feststoffgehalt von 25 bis 30 % und einer Viskosität von 1 000 bis 10 000 mPa•s.

Beispiel 4 (Herstellung)

Einwaage

| | | |
|---|---|---|
| a) | 208 g | Acrylnitril |
| b) | 653 g | N-Vinylpyrrolidon |
| c) | 139 g | Acrylamid |
| d) | 277 g | Acrylsäure-Natriumsalz (gelöst in 385 ml Wasser) |
| e) | 1115 g | Wasser |
| f) | 3,8 g | Azoisobutyronitril (in 80 ml Methanol) |

Die Komponenten a) bis e) werden vorgelegt. Nach 30minütigem $N_2$-Einleiten unter Rühren wird f) zugegeben und erwärmt. Es wird eine Stunde bei 80 bis 90 °C gehalten und dabei schrittweise mit insbesamt ca. 6 000 ml wasser verdünnt.

Man erhält ein klares Polymerisat mit einem Feststoffgehalt von 10 bis 15 % und einer Viskosität von 1 000 bis 10 000 mPa•s.

Beispiele 5 bis 7 (Anwendung als Fluid loss-Additiv)

Um die vorteilhafte Wirkung der erfindungsgemäßen Polymerisate zu belegen, wird das Polymerisat gemäß Beispiel 1 folgenden Testverfahren gemäß API RP 13 B (11. Auflage V. 01.05.1981, S. 9 ff) unterworfen:

Test A: API-Fluid loss-Test (Filtrationsversuch bei Raumtemperatur und 7 bar Überdruck)

Test B: Hochdruck-Hochtemperatur (HPHT)-Filtrationsversuch bei 35 bar und (450°F) 233°C nach jeweiliger 24-stündiger dynamischer Belastung der Spülung im sog. "Rollerofen".

Es werden bei beiden Filtrationsversuchen jeweils die Volumenwerte der aus der Prüfzelle austretenden Bohrspülungsflüssigkeit in ml angegeben. Diese Menge sollte möglichst gering sein.

Um den Einfluß unterschiedlicher Elektrolytbelastung zu untersuchen, werden verschiedene Bohrspülungen mit wechselnden Salzgehalten angewendet.

Spülung I 4%ige Bentonit-Suspension
Spülung II " + 25 Gew.-% NaCl + 1 Gew.-% $CaSO_4 \cdot 0,5\ H_2O$
Spülung III " + 10 Gew.-% NaCl + 10 Gew-% $CaCl_2$
Spülung IV " + 4 Gew.-% Meersalz
Spülung V " + 26 Gew.-% NaCl + 5 Gew.-% Revdust + 420 g/l $BaSO_4$

Spülung III stellt wegen ihres hohen Calciumgehaltes an das Fluid loss-Additiv die mit Abstand höchsten Anforderungen.

Beispiel 5

Filtratwerte gemäß Test A bei Raumtemperatur und 2 gew.-% iger Dosierung bezogen auf den Feststoffgehalt der Polymerisatlösung nach Beispiel 1 in den Spülungen I bis IV.

| | |
|---|---|
| I | 5,4 ml |
| II | 3,5 ml |
| III | 3,7 ml |
| IV | 5,8 ml |

Bei Raumtemperatur zeigt das erfindungsgemäße Polymerisat eine gute Filtratreduzierung (Blindwert der Spülung III ohne Additiv: ca. 90 ml Filtrat).

Beispiel 6

Ermittlung der Filtratwerte nach 25-stündiger Alterung der Spülungen bei (450 ° F) 233 ° C und 3 gew.-%iger Dosierung, bezogen auf den Feststoffgehalt der Polymerisatlösung nach Beispiel 1:

a)

| | Test A | | Test B |
|---|---|---|---|
| I | 4,2 ml | I | 28 ml |
| II | 2,4 ml | II | 22 ml |
| III | 2,3 ml | III | 40 ml |
| IV | 3,8 ml | IV | 36 ml |

Insbesondere die Filtratwerte der Spülung III zeigen, daß das erfindungsgemäße Polymerisat auch nach thermischer Belastung bei 233 ° C in der Lage ist, den Flüssigkeitsverlust elektrolytreicher Bohrspülungen gut unter Kontrolle zu halten.

b)

| | Test A | | Test B |
|---|---|---|---|
| III | 1,1 ml | III | 20 ml |

Hier wurde ein Polymerisat eingesetzt, das gemäß Beispiel 1, jedoch mit einer Starterkonzentration von 0,45 g hergestellt wurde.

Beispiel 7

Filtratwerte gemäß Test A in Spülung V nach 24-stündiger Alterung im Rollerofen bei 220 ° C und 3 gew.-%iger Dosierung bezogen auf den Feststoffgehalt der nach Beispiel 1 bis 4 hergestellten Polymerisatlösungen:

| Polymerisat nach Beispiel | Filtratwert in ml. |
|---|---|
| 1 | 5,7 |
| 2 | 6,2 |
| 3 | 8,1 |
| 4 | 6,8 |

Beispiele 8 bis 10 (Anwendung als Retentionsmittel)

Beispiel 8

Dieses Beispiel erläutert die Verwendbarkeit des nach Beispiel 2 hergestellten erfindungsgemäßen Produktes als Retentionsmittel für Tiefbohrzementschlämmen, die eine größere Menge an Calciumsalz enthalten.

Nach der Vorschrift von API Specification 10 (Ausgabe Januar 1982) stellt man eine Zementschlämme her aus:

| | |
|---|---|
| 792 g | Tiefbohrzement der API-Klasse G |
| 303 g | Wasser |
| 15,8 g | Calciumchlorid x 6 $H_2O$ |
| 7,92 | Naphthalinsulfonsäure-Formaldehyd-Dispersant |
| 52,8 g | einer 15%igen Lösung des nach Beispiel 2 hergestellten hydrolysierten Polymerisats |

Beim Anmischen geht man so vor, daß das Wasser mit der Polymerisat-Lösung vorgelegt und eine Trockenmischung aus Zement, Calciumchlorid und den Naphthalinsulfonsäure-Formaldehyd-Dispersant zugegeben wird.

Die so angemischte Zementschlämme rührt man 20 Min. im atmosphärischen Konsistometer bei 25 °C und bestimmt anschließend den Filtratverlust bei 1000 psi Druck entsprechend der Vorschrift von API Spec. 10.

Die Schlämme weist einen sehr niedrigen Wasserverlust von 28 ml nach 30 Minuten auf.

Beispiel 9

Das Beispiel demonstriert die Verwendbarkeit des nach Beispiel 2 hergestellten erfindungsgemäßen Produkts als Retentionsmittel für Salzlösungen, wie sie z.B. als sog. Aufwältigungs- und Komplettierungsflüssigkeiten in der Erdölindustrie verwendet werden.

Man bereitet eine Komplettierungsflüssigkeit, welche 30 % Calciumchlorid enthält, aus

| | |
|---|---|
| 148 g | Wasser |
| 117 g | Calciumchlorid |
| 50 g | Kreidepulver |
| 100 g | 15 %ige Polymerisat-Lösung, hergestellt nach Beispiel 2 der Anmeldung ohne alkalische Hydrolyse |

Diese Suspension weist bei Raumtemperatur einen API-Wasserverlust von 4,8 ml (bestimmt mit 7 bar Überdruck, nach API RP 13 B, Ausgabe 1981) auf.

Zur Prüfung der Retentionswirkung des Polymers unter Thermobelastung wird obige Komplettierungsflüssigkeit in eine Alterungszelle gefüllt und dicht verschlossen 24 Stunden bei 200 °C statisch gelagert.

Nach der Alterung wird auf Raumtemperatur abgekühlt und erneut der API-Wasserverlust bei 7 bar Überdruck bestimmt. Man findet 3,6 ml. Der HTHP-Wasserverlust (bestimmt mit 500 psi Differenzdruck) dieser bei 200 °C gealterten Probe beträgt bei 180 °C 10 ml.

Das Beispiel zeigt, daß das erfindungsgemäße Polymerisat den Wasserverlust stark Calciumsalzhaltiger Lösungen auch nach drastischer Thermobelastung noch gut erniedrigt.

Beispiel 10

Nach den Beispielen 1 und 2 hergestellte Polymerisatlösungen können zur Bereitung von Mörteln oder Zementleim mit hohem Wasserrückhaltevermögen wie z.B. für Gasbetonverklebungen verwendet werden.

Der Gasbeton ist durch den Zementleim so fest verklebt, daß nach 24 h kein Bruch in der Fuge mehr auftritt.

Das gleiche Ergebnis wird mit Pulverprodukten erzielt, welche durch übliche Methoden wie z.B. Sprühoder Walzentrocknung aus der Polymerisatlösung hergestellt, 15 Stunden bei 230 °C im Trockenschrank thermobehandelt und anschließend dem Zementleim als Retentionsmittel zugesetzt wurden.

**Patentansprüche**

**1.** Thermostabiles Polymerisat,
**dadurch gekennzeichnet,**
daß es aus
a) 16 bis 67 Mol % Baugruppen der Formel I

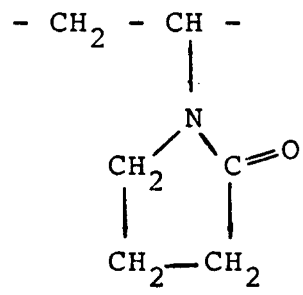

b) 5 bis 42 Mol % Baugruppen der Formel II

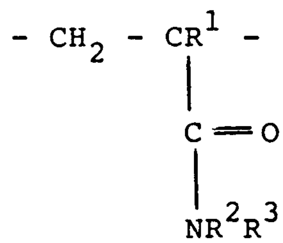

wobei, $R^1$, $R^2$ und $R^3$ jeweils unabhängig voneinander H oder $CH_3$ bedeuten, sowie
c) 16 bis 46 Mol % Baugruppen der Formel III

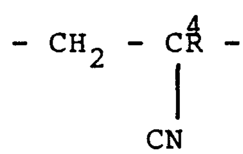

worin $R^4$ = H oder $CH_3$ bedeutet, besteht.

**2.** Polymerisat nach Anspruch 1,
**dadurch gekennzeichnet,**
daß es aus 41 bis 57 Mol % Baugruppen der Formel I, 13 bis 18 Mol % Baugruppen der Formel II und 30 bis 41 Mol % Baugruppen der Formel III besteht.

**3.** Polymerisat nach den Ansprüchen 1 oder 2,
**dadurch gekennzeichnet,**
daß es zusätzlich bis zu 40 Mol %, bezogen auf die Summe der Baugruppen der Formeln I, II und III, Baugruppen enthält, deren Monomere einen Q-Wert von 0.04 bis 5 aufweisen.

**4.** Polymerisat nach den Ansprüchen 1 bis 3,
**dadurch gekennzeichnet,**
daß es zusätzlich bis zu 10 Mol %, bezogen auf die Summe der Baugruppen der Formeln I, II und III, von einem Vernetzer gebildete Baugruppen enthält.

**5.** Polymerisat nach Anspruch 4,
**dadurch gekennzeichnet,**
daß es die Reste von N,N-Methylen-bis-acrylamid und/oder Isopren als Vernetzer enthält.

**6.** Polymerisat nach den Ansprüchen 1 bis 5,
**dadurch gekennzeichnet,**
daß die Baugruppen I bis III ganz oder teilweise in hydrolysierter Form vorliegen.

7. Verfahren zur Herstellung des Polymerisats nach einem der Ansprüche 1 bis 6,
**dadurch gekennzeichnet,**
daß man 16 bis 67 Mol % N-Vinylpyrrolidon, 5 bis 42 Mol % eines Acrylamids und/oder Methacrylamids und 16 bis 46 Mol % Acrylnitril und/oder Methacrylnitril in wäßrigem Medium mit Hilfe eines Starters bei 20 bis 200° C polymerisiert.

8. Verfahren nach Anspruch 7,
**dadurch gekennzeichnet,**
daß man 41 bis 57 Mol % N-Vinylpyrrolidon, 13 bis 18 Mol % eines Acrylamids und/oder Methacrylamids sowie 30 bis 41 Mol % Acrylnitril und/oder Methacrylnitrile einsetzt.

9. Verfahren nach den Ansprüchen 7 oder 8,
**dadurch gekennzeichnet,**
daß man das Acrylamid und/oder Methacrylamid in unsubstituierter Form verwendet.

10. Verfahren nach einem Ansprüche 7 bis 9,
**dadurch gekennzeichnet,**
daß man zusätzlich bis zu 40 Mol %, bezogen auf die Summe der in Anspruch 7 genannten Bestandteile, eines Monomers mit einem Q-Wert von 0,04 bis 5 einsetzt.

11. Verfahren nach Anspruch 10,
**dadurch gekennzeichnet,**
daß man das Monomer aus der Gruppe Methylvinylketon, Allylalkohol, Acrolein, Acrylsäure und Methacrylsäure auswählt.

12. Verfahren nach einem der Ansprüche 7 bis 11,
**dadurch gekennzeichnet,**
daß man die Polymerisation bei Temperaturen von 50 bis 100° C durchführt.

13. Verfahren nach einem der Ansprüche 7 bis 12,
**dadurch gekennzeichnet,**
daß die Konzentration der wäßrigen Lösung 10 bis 70 Gew.-%, vorzugsweise 30 bis 50 Gew.-% beträgt.

14. Verfahren nach einem der Ansprüche 7 bis 13,
**dadurch gekennzeichnet,**
daß man den Starter in einer Konzentration von 0,1 bis 5 Gew.-%, bezogen auf das Gewicht der wäßrigen Lösung, einsetzt.

15. Verfahren nach einem der Ansprüche 7 bis 14,
**dadurch gekennzeichnet,**
daß man als Starter Azoisobutyronitril verwendet.

16. Verfahren nach einem der Ansprüche 7 bis 15,
**dadurch gekennzeichnet,**
daß man im Anschluß an die Polymerisation eine Hydrolyse bei 50 bis 100° C vorzugsweise bei 60° C bis 80° C durchführt.

17. Verwendung des Polymerisats nach einem der Ansprüche 1 bis 6 als Retentionsmittel für wäßrige System.

18. Verwendung des Polymerisats nach einem der Ansprüche 1 bis 6 als Fluid loss-Additive in einer Menge von 0,3 bis 5 Gew.-%, bezogen auf das Gewicht der Bohrspülung.

## Claims

1. Thermostable polymer, characterised in that it consists of
   a) 16 to 67 mol % of structural groups of the formula I

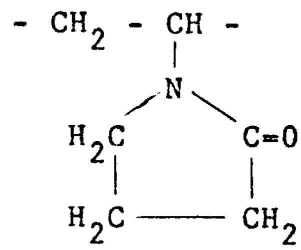

b) 5 to 42 mol % of structural groups of the formula II

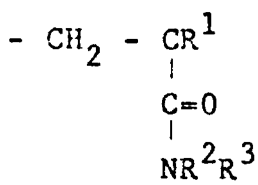

whereby $R^1$, $R^2$ and $R^3$, in each case independently of one another, signify H or $CH_3$, as well as
c) 16 to 46 mol % of structural groups of the formula III

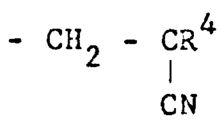

wherein $R^4$ = H or $CH_3$.

2. Polymer according to claim 1, characterised in that it consists of 41 to 57 mol % of constructional groups of the formula I, 13 to 18 mol % of structural groups of the formula II and 30 to 41 mol % of structural groups of the formula III.

3. Polymer according to claims 1 or 2, characterised in that it additionally contains up to 40 mol %, referred to the sum of the structural groups I, II and III, of structural components, the monomers of which have a Q value of 0.04 to 5.

4. Polymer according to one of claims 1 to 3, characterised in that it additionally contains up to 10 mol %, referred to the sum of the structural groups I, II and III, of structural groups forming a cross-linker.

5. Polymer according to claim 4, characterised in that it contains the radicals of N,N-methylene-bis-acrylamide and/or of isoprene as cross-linker.

6. Polymer according to claims 1 to 5, characterised in that the structural groups I to III are present wholly or partly in hydrolysed form.

7. Process for the production of the polymer according to one of claims 1 to 6, characterised in that one polymerises 16 to 67 mol % of N-vinylpyrrolidone, 5 to 42 mol % of an acrylamide and/or methacrylamide and 16 to 46 mol % of acrylonitrile and/or methacrylonitrile in an aqueous medium with the help of an initiator at 20 to 200 °C.

8. Process according to claim 7, characterised in that one uses 41 to 57 mol % of N-vinylpyrrolidone, 13 to 18 mol % of an acrylamide and/or methacrylamide, as well as 30 to 41 mol % of acrylonitrile and/or methacrylonitrile.

9. Process according to claims 7 or 8, characterised in that one uses the acrylamide and/or

methacrylamide in unsubstituted form.

**10.** Process according to one of claims 7 to 9, characterised in that one additionally uses up to 40 mol %, referred to the sum of the components mentioned in claim 7, of a monomer with a Q value of 0.04 to 5.

**11.** Process according to claim 10, characterised in that one selects the monomer from the group methyl vinyl ketone, allyl alcohol, acrolein, acrylic acid and methacrylic acid.

**12.** Process according to one of claims 7 to 11, characterised in that one carries out the polymerisation at temperatures of 50 to 100 ° C.

**13.** Process according to one of claims 7 to 12, characterised in that the concentration of the aqueous solution amounts to 10 to 70 wt.%, preferably 30 to 50 wt.%.

**14.** Process according to one of claims 7 to 13, characterised in that one uses the initiator in a concentration of 0.1 to 5 wt.%, referred to the weight of the aqueous solution.

**15.** Process according to one of claims 7 to 14, characterised in that one uses azoisobutyronitrile as initiator.

**16.** Process according to one of claims 7 to 15, characterised in that, subsequent to the polymerisation, one carries out a hydrolysis at 50 to 100 ° C, preferably at 60 ° C to 80 ° C.

**17.** Use of the polymer according to one of claims 1 to 6 as retention agent for aqueous systems.

**18.** Use of the polymer according to one of claims 1 to 6 as fluid loss additive in an amount of 0.3 to 5 wt.%, referred to the weight of the drilling fluid.

**Revendications**

**1.** Polymère thermostable, caractérisé en ce qu il est constitué par
a) 16 à 67 % en moles de motifs de formule I

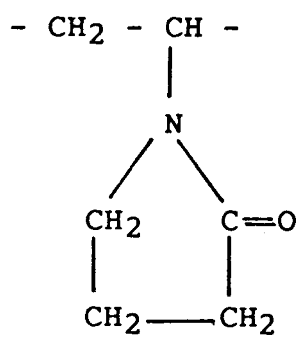

b) 5 à 42 % en moles de motifs de formule II

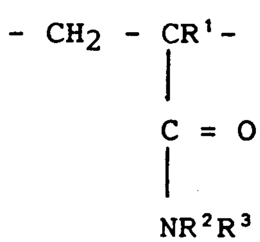

dans laquelle $R^1$, $R^2$ et $R^3$ représentent, indépendamment l'un de l'autre, H ou $CH_3$, et
c) 16 à 46 % en moles de motifs de formule III

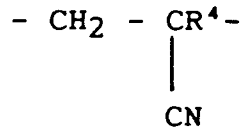

dans laquelle $R^4$ = H ou $CH_3$.

**2.** Polymère selon la revendication 1, caractérisé en ce qu'il est constitué par 41 à 57 % en moles de motifs de formule I, 13 à 18 % en moles de motifs de formule II et 30 à 41 % en moles de motifs de formule III.

**3.** Polymère selon les revendications 1 ou 2, caractérisé ce qu'il contient en plus jusqu'à 40 % en moles, par rapport à la somme des motifs de formule I, II et III, de motifs dont les monomères présentent une valeur Q comprise entre 0,04 et 5.

**4.** Polymère selon l'une des revendications 1 à 3, caractérisé en ce qu'il contient en outre jusqu'à 10 % en moles, par rapport à la somme des motifs de formule I, II et III, de motifs formés par un agent de réticulation.

**5.** Polymère selon la revendication 5, caractérisé en ce qu'il contient les restes de N,N-méthylène-bis-acrylamide et/ou d'isoprène comme agent de réticulation.

**6.** Polymère selon les revendications 1 à 5, caractérisé en ce que les motifs I à III se trouvent entièrement ou partiellement sous forme hydrolysée.

**7.** Procédé de préparation du polymère selon l'une des revendications 1 à 6, caractérisé en ce qu'on polymérise 16 à 67 % en moles de N-vinylpyrrolidone, 5 à 42 % en moles d'un acrylamide et/ou d'un méthacrylamide et 16 à 46 % en moles d'acrylonitrile et/ou de méthacrylonitrile en milieu aqueux, à l'aide d'un initiateur, à une température de 20 à 200 ° C.

**8.** Procédé selon la revendication 7, caractérisé en ce qu'on utilise 41 à 57 % en moles de N-vinylpyrrolidone, 13 à 18 % en moles d'un acrylamide et/ou d'un méthacrylamide et 30 à 41 % en moles d'acrylonitrile et/ou de méthacrylonitrile.

**9.** Procédé selon les revendications 7 ou 8, caractérisé en ce qu'on utilise l'acrylamide et/ou le méthacrylamide sous forme non substituée.

**10.** Procédé selon l'une des revendications 7 à 9, caractérisé en ce qu'on introduit en plus jusqu'à 40 % en moles, par rapport à la somme des constituants indiqués dans la revendication 7, d'un monomère ayant une valeur Q comprise entre 0,04 et 5.

**11.** Procédé selon la revendication 10, caractérisé en ce qu'on choisit le monomère dans le groupe constitué par la méthylvinylcétone, l'alcool allylique, l'acroléine, l'acide acrylique et l'acide méthacrylique.

**12.** Procédé selon l'une des revendications 7 à 11, caractérisé en ce qu'on effectue la polymérisation à des températures comprises entre 50 et 100 ° C.

**13.** Procédé selon l'une des revendications 7 à 12, caractérisé en ce que la concentration de la solution aqueuse est comprise entre 10 et 70 % en poids, de préférence entre 30 et 50 % en poids.

**14.** Procédé selon l'une des revendications 7 à 13, caractérisé en ce qu'on introduit l'initiateur en une concentration de 0,1 à 5 % en poids par rapport au poids de la solution aqueuse.

15. Procédé selon l'une des revendications 7 à 14, caractérisé en ce qu'on utilise l'azoisobutyronitrile comme initiateur.

16. Procédé selon l'une des revendications 7 à 15, caractérisé en ce que, après la polymérisation, on effectue une hydrolyse à une température de 50 à 100 ° C, de préférence de 60 à 80 ° C.

17. Application du polymère selon l'une des revendications 1 à 6 comme agent de rétention pour des systèmes aqueux.

18. Application du polymère selon l'une des revendications 1 à 6 comme réducteur de fluide en une quantité de 0,3 à 5 % en poids par rapport au poids de la boue de forage.